# EUROPÄISCHE PATENTANMELDUNG

(11) **EP 4 732 992 A1**
(43) Veröffentlichungstag der Anmeldung: **29.04.2026**
(21) Anmeldenummer: 24209086.8
(22) Anmeldetag: 27.10.2024
(51) Int. Cl.: B23Q 11/00

(54) **ROTATIONSWERKZEUGTEIL**

(71) Anmelder: Schlageter, Klaus, 78727 Oberndorf (DE)
(72) Erfinder: Schlageter, Klaus, 78727 Oberndorf (DE)
(74) Vertreter: Mzb PartmbB

(57) **Zusammenfassung**

Die Erfindung betrifft ein besonders effizient reinigendes Rotationswerkzeugteil (10), beispielsweise Werkzeugaufnahme zur Aufnahme eines Rotationswerkzeugs (42), insbesondere eines Fräswerkzeugs oder Bohrwerkzeugs, wobei das Rotationswerkzeugteil (10) eine Längsachse (L) als Rotationsachse aufweist, umfassend eine Luftfördervorrichtung (12), wobei die Luftfördervorrichtung (12) eine Saugkomponente (16) zum Ansaugen von Luft an der Frontseite (20), insbesondere aus der Richtung eines Werkstücks (40) umfasst. Es ist dadurch gekennzeichnet, dass die Luftfördervorrichtung (12) eine Blaskomponente (18) zum Blasen von Luft von einer Frontseite (20) des Rotationswerkzeugteils (10), insbesondere in Richtung des Werkstücks (40), umfasst.

## Beschreibung

Die vorliegende Erfindung betrifft ein Rotationswerkzeugteil, wobei das Rotationswerkzeugteil eine Längsachse als Rotationsachse aufweist, umfassend eine Luftfördervorrichtung, wobei die Luftfördervorrichtung eine Saugkomponente zum Ansaugen von Luft an einer Frontseite des Rotationswerkzeugteils, insbesondere aus der Richtung eines Werkstücks, umfasst.

### Stand der Technik

Aus der europäischen Patentanmeldung EP2422925A1 ist eine Saugvorrichtung in Form einer Abführeinrichtung zum Abführen von Partikeln an einem Bearbeitungsmittel, beispielsweise einem Rotationswerkzeug, bekannt. Die Abführeinrichtung umfasst ein Flügelrad, das eingerichtet ist, eine Luftströmung zum Ansaugen und Abführen von Partikeln, die bei der Bearbeitung mittels des Bearbeitungsmittels entstehen, zu erzeugen. Ferner umfasst sie einen dem Flügelrad vorgeschalteten Abscheider, der Partikel aus der vom Flügelrad angesaugten Luft vor dem Passieren des Flügelrads abscheidet.

### Offenbarung der Erfindung

Die bislang bekannten Absaugturbinen weisen nur eine geringe Energieeffizienz auf.

Um das Rotationswerkzeug oder ein vom Rotationswerkzeug zu bearbeitendes Werkstück hinreichend zu reinigen, wird eine hohe Saugkraft benötigt, die wiederum erst durch hohe Drehzahlen erreicht wird. Neben einem damit verbundenen sehr hohen Energiebedarf kommt es auch zu hohen Geräuschpegeln mit entsprechenden Lärmbelastungen.

Aufgabe der vorliegenden Erfindung ist es daher, Vorrichtungen der eingangs genannten Art anzubieten, die eine effiziente Möglichkeit bieten, Werkstücke während der Bearbeitung mittels Rotationswerkzeugen zu reinigen.

Gelöst wird die Aufgabe zunächst durch ein Rotationswerkzeugteil, wobei das Rotationswerkzeugteil eine Längsachse als Rotationsachse aufweist, umfassend eine Luftfördervorrichtung, wobei die Luftfördervorrichtung eine Saugkomponente zum Ansaugen von Luft an seiner Frontseite, insbesondere aus der Richtung eines Werkstücks, umfasst, wobei die Luftfördervorrichtung eine Blaskomponente zum Blasen von Luft von einer Frontseite des Rotationswerkzeugteils, insbesondere in Richtung des Werkstücks, umfasst.

Das Rotationswerkzeugteil kann beispielsweise eine Werkzeugaufnahme zur Aufnahme eines Rotationswerkzeugs, beispielsweise eines Fräswerkzeugs, eines Rotationsschleifwerkzeugs oder eines Bohrwerkzeugs, sein. Denkbar ist auch, dass das Rotationswerkzeugteil selbst als Rotationswerkzeug, beispielsweise als Fräswerkzeug, als Rotationsschleifwerkzeug oder als Bohrwerkzeug, ausgebildet ist.

Ein der Erfindung zugrunde liegender Gedanke ist, mit dem Rotationswerkzeugteil zwei gegenläufige Strömungen zu erzeugen. Dazu weist die Luftfördervorrichtung nicht nur die Saugkomponente, sondern auch die Blaskomponente auf.

Ähnlich einem Tornado, der eine besonders starke Wirkung erzielt, in dem gleichzeitig Fallwinde und Steigwinde produziert werden, kann das Rotationswerkzeugteil auf effiziente Weise eine hohe Reinigungsleistung erzielen.

Je nach Ausgestaltung kann das Rotationswerkzeugteil effektiv entweder als Saugvorrichtung oder als Blasvorrichtung wirken. Als Saugvorrichtung kann es durch Absaugen von bei der Bearbeitung eines Werkstücks entstehenden Partikeln reinigen. Als Blasvorrichtung kann es durch Abblasen der Partikel reinigen.

Gegenüber bisherigen Lösungen kann somit beispielsweise eine Drehzahl reduziert werden, ohne die Reinigungsleistung zu reduzieren. Somit lässt sich die Energieeffizienz verbessern. Durch eine reduzierte Drehzahl können Geräuschpegel und damit Lärmbelastungen ebenfalls reduziert werden.

Das Rotationswerkzeugteil kann zur Verwendung mit einem Drehantrieb, beispielsweise einer Fräsmaschine oder einer Bohrmaschine, eingerichtet sein. Das Rotationswerkzeugteil kann selbst als Rotationswerkzeug ausgebildet sein. Beispielsweise kann es einen Abschnitt mit einer Frässchneide oder einem Bohrkopf aufweisen.

Das Rotationswerkzeugteil kann auch eine Werkzeugaufnahme aufweisen, die eingerichtet ist, ein Rotationswerkzeug aufzunehmen.

Das Rotationswerkzeugteil kann zwei Stirnseiten entlang seiner Längsachse aufweisen.

Die eine der beiden Stirnseiten kann derjenigen Stirnseite entsprechen, die nach Montage des Rotationswerkzeugteils am Drehantrieb zum Drehantrieb weist. Die andere Stirnseite, im Folgenden als Frontseite bezeichnet, kann weg vom Drehantrieb weisen. Sie kann insbesondere zum Rotationswerkzeug, einer Werkzeugspitze des Rotationswerkzeugs oder zu einem Werkstück, das durch das Rotationswerkzeug oder die Rotationswerkzeugspitze bearbeitet wird, weisen.

Die Saugkomponente und die Blaskomponente können somit Strömungen erzeugen, die beide an der Frontseite eintreten bzw. austreten.

Die Luftfördervorrichtung kann wenigstens einen Impeller aufweisen. Ein Impeller kann gegenüber einem freien Flügelrad eine höhere Effizienz entwickeln. Einströmende und / oder ausströmende Luft kann auf vorbestimmte Bahnen gelenkt werden.

Das Rotationswerkzeugteil kann ein Flügelrad mit einer Vielzahl von Flügeln umfassen.

Das Rotationswerkzeugteil kann besonders klein gebaut werden, insbesondere einen geringen Radius aufweisen, wenn die Flügel eine parallel zur Längsachse gemessene Höhe von wenigstens dem 1,3-fachen des Radius des Rotationswerkzeugteils aufweisen. Durch einen geringen Außendurchmesser können, beispielsweise bei hohen Drehzahlen, Materialbeanspruchungen reduziert werden. Die Betriebssicherheit lässt sich erhöhen. Auch können Schwingungen reduziert werden. Insbesondere können Unwuchten vermieden werden, sodass dass das Fräsbild und die Schnittqualität verbessert werden können.

An der Frontseite kann eine Frontplatte vorgesehen sein. Die Frontplatte kann eine Vielzahl von Schlitzen aufweisen. Die Schlitze können radial verteilt um die Längsachse positioniert sein. Die Frontplatte kann dadurch als Strömungsverstärker fungieren. Eine besonders strömungsgünstige Frontplatte kann dabei Schlitze aufweisen, die schräg zu ihren Radialrichtungen verlaufen.

Das Rotationswerkzeugteil kann besonders hohen Drehzahlen standhalten, wenn es einstückig ausgebildet ist. Es kann, zumindest teilweise, im 3-D-Druck gefertigt sein.

Das Rotationswerkzeugteil kann als Werkzeugaufnahme ausgebildet sein, um so besonders flexibel verwendbar zu sein. Werkzeugeinsätze lassen sich austauschen, sodass sich insgesamt die Wartbarkeit verbessert und laufende Betriebskosten gesenkt werden können. Dazu kann das Rotationswerkzeugteil ein Spannfutter umfassen.

Bei einer Klasse von alternativen Ausführungsformen kann das Rotationswerkzeugteil mehrstückig ausgebildet sein. Insbesondere können das Spannfutter und die Luftfördervorrichtung jeweils als separate Teile ausgebildet sein. Insbesondere, wenn das Material des Rotationswerkzeugteils auch hohen Drehzahlen standhält, beispielsweise im Falle von aus einem Stahl gefertigten Rotationswerkzeugteilen, können Hinterschnitte der Geometrien der einzelnen Teile vermieden werden. Dadurch lassen sich die Teile durch eine große Vielzahl verschiedener, geeigneter Verfahren, beispielsweise im Spritzguss oder spanabhebend, kostengünstig fertigen.

Insbesondere wenn das Spannfutter und die Luftfördervorrichtung als separate Teile gefertigt sind, kann das Spannfutter von einer der Frontseite gegenüberliegenden Rückseite, also von der anderen Stirnseite aus, in die Luftfördervorrichtung eingeführt werden. Die Luftfördervorrichtung kann also vor dem Spannfutter sitzen, wenn die Frontseite als Vorderseite und die gegenüberliegende Stirnseite als Rückseite betrachtet werden.

Das Spannfutter kann beispielsweise von hinten auf die Luftfördervorrichtung aufgeschrumpft sein. Denkbar ist auch, dass Spannfutter einzupressen und / oder mit Formanpassung zu montieren.

Die vorne sitzende Luftfördervorrichtung kann in all diesen Fällen ein Abrutschen des Spannfutter nach vorne, also auf das zu bearbeitende Werkstück zu, verhindern.

Das Spannfutter kann als Hydrodehnspannfutter ausgebildet sein. Als Rotationswerkzeugwechsler ausgebildete Maschinen können durch ein solches Spannfutter besonders einfach und sicher ein Rotationswerkzeug in das Rotationswerkzeugteil einspannen oder schnell ausspannen.

Alternativ ist denkbar, das Spannfutter als Spannzangenfutter auszubilden, sodass es keiner Fluidkanäle für Hydraulikfluid oder dergleichen bedarf.

Bei der Bearbeitung eines Werkstücks mithilfe eines entlang der Längsachse angeordneten, im Spannfutter eingespannten Rotationswerkzeugs entstehen Späne primär in einem Zentralbereich um die Rotationsachse, also die Längsachse.

Soll das Rotationswerkzeugteil effektiv als Saugvorrichtung fungieren, ähnlich einem Tornado, der Gegenstände vom Boden in hohe Höhen hebt, ist es daher denkbar, dass die Saugkomponente eingerichtet ist, entlang einer Arbeitsrichtung im Zentralbereich um die Rotationsachse Luft an der Frontseite anzusaugen.

Um einen strömungstechnischen Kurzschluss zwischen den durch die Blaskomponente und die Saugkomponente erzeugten Strömungen zu vermeiden, können die Saugkomponente und die Blaskomponente eingerichtet sein, bei Rotation des Rotationswerkzeugteils, zumindest bei Rotation entlang der Arbeitsrichtung, in unterschiedlichen radialen Abständen von der Längsachse anzusaugen oder zu blasen.

Im Falle, dass das Rotationswerkzeugteil effektiv als Saugvorrichtung fungieren soll, kann beispielsweise die Blaskomponente eingerichtet sein, entlang eines großen Radius um die Längsachse herum zu blasen, und die Saugkomponente kann eingerichtet sein, entlang eines geringeren Radius um die Längsachse herum einen Sog zu generieren.

Je nach Geometrie der Saugkomponente und / oder der Blaskomponente kann ein solcher strömungstechnischer Kurzschluss auch dadurch vermieden werden, dass die Drehzahl des Rotationswerkzeugteils bei der Bearbeitung des Werkstücks mithilfe des Rotationswerkzeugs bzw. des Rotationswerkzeugteils geeignet gewählt wird. Beispielsweise können sehr hohe Drehzahlen, beispielsweise wenigstens 3000 Umdrehungen/min, beispielsweise bei Bohrmaschinen, oder beispielsweise wenigstens 18.000 Umdrehungen/min, beispielsweise in der Möbelindustrie, oder sogar wenigstens 40.000 Umdrehungen/min und beispielsweise bis 60.000 Umdrehungen/min, wie beispielsweise zum Fräsen von Aluminium in der Luftfahrt oder für Graphitelektroden.

Alternativ oder ergänzend kann zur Vermeidung von strömungstechnischen Kurzschlüssen auch vorgesehen sein, dass die durch die Saugkomponente und die Blaskomponente bei Rotation des Rotationswerkzeugteils an der Frontplatte erzeugten Strömungen voneinander, insbesondere um wenigstens 10 Prozent des Durchmessers, beabstandet sind.

Die Geometrie des Rotationswerkzeugteils und / oder die Drehzahlen, mit denen das Rotationswerkzeugteil rotiert, können so gewählt werden, dass die von der Blaskomponente erzeugte Strömung eine Werkzeugspitze des Rotationswerkzeugs und / oder ein bearbeitendes Werkstück erreicht, von dort Partikel zum Zentrumsbereich hin bläst und von dort von der durch die Saugkomponente erzeugte gegenläufige Strömung mitgerissen und bis wenigstens durch die Frontplatte hindurch transportiert werden.

Soll das Rotationswerkzeugteil effektiv als Blasvorrichtung dienen, so ist denkbar, dass die Blaskomponente eingerichtet ist, bei Rotation des Rotationswerkzeugteils entlang der Arbeitsrichtung in dem Zentrumsbereich um die Längsachse Luft von der Frontseite, insbesondere in Richtung des Werkstücks, zu blasen.

Ein Pirouetteneffekt kann besonders wirksam genutzt werden, ähnlich wie bei einem Tornado im Freien, wenn die Blaskomponente eingerichtet ist, die Luft schräg zur Längsrichtung zu blasen. Das Blasen kann somit nicht nur senkrecht, insbesondere parallel zur Längsrichtung, von der Frontseite weg erfolgen, sondern in einem von 90° verschiedenen Winkel. Beispielsweise kann der Winkel in Abhängigkeit einer typischen Drehzahl gewählt sein. Er kann beispielsweise im Bereich von 10 und 45° zur Längsachse ausgerichtet sein.

Wenigstens ein Flügel des Rotationswerkzeugteils kann mit einem Dämpfungselement, beispielsweise einem linienförmigen Dämpfungselement, versehen sein, um durch die Strömungen verursachte Geräusche zu dämpfen.

Das Rotationswerkzeugteil kann insbesondere bei der Bearbeitung von Werkstücken genutzt werden, die trocken bearbeitet werden sollten. Beispielsweise kann das Rotationswerkzeugteil zur Bearbeitung von Holzteilen, beispielsweise im Möbelbau, verwendet werden.

Auch in Anwendungsfeldern, die eine hohe Präzision erfordern und / oder die besonders saubere Arbeitsumgebungen erfordern, kann das Rotationswerkzeugteil besonders vorteilhaft eingesetzt werden. Denkbar ist beispielsweise die Verwendung des Rotationswerkzeugteils bei der Herstellung von Flügelteilen, beispielsweise Winglets, von Flugzeugen.

Auch ein Einsatz im Bereich der Medizintechnik, beispielsweise zur Herstellung von Implantaten, beispielsweise in der Zahntechnik, und hier insbesondere durch spanabhebende Techniken, wie beispielsweise Fräsen oder Schleifen, kann besonders vorteilhaft sein.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

Kurze Beschreibung der Zeichnungen

Es zeigen:
- Fig. 1: ein Rotationswerkzeugteil in Form einer Saugvorrichtung,
- Fig. 2: ein weiteres Rotationswerkzeugteil mit einer Frontplatte,
- Fig. 3: das Rotationswerkzeugteil aus Fig. 2 in einer Seitenansicht,
- Fig. 4: eine schematische Querschnittansicht durch ein Rotationswerkzeug mit einer schematischen Darstellung der umgebenden Strömungsverhältnisse,
- Fig. 5: eine schematische Seitenansicht eines Rotationswerkzeugteils zur weiteren Verdeutlichung der Strömungsverhältnisse,
- Fig. 6: ein weiteres Rotationswerkzeugteil in Form einer Blasvorrichtung mit einem Hydrodehnspannfutter,
- Fig. 7: eine Blaskomponente des Rotationswerkzeugteils aus Fig. 6 und
- Fig. 8: ein Rotationswerkzeugteil in Form einer Blasvorrichtung mit einer Spannzange.

Zur Erleichterung des Verständnisses der Erfindung werden in der nachfolgenden Figurenbeschreibung für sich entsprechende Elemente jeweils die gleichen Bezugszeichen verwendet.

### Ausführungsformen der Erfindung

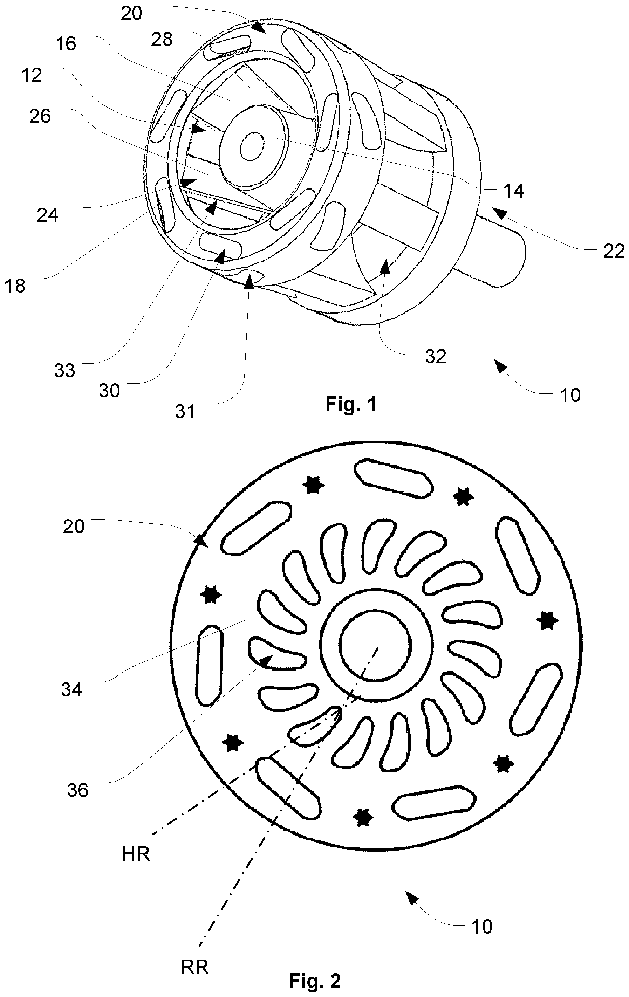

Fig. 1 zeigt ein Rotationswerkzeugteil 10. Das Rotationswerkzeugteil 10 umfasst eine Luftfördervorrichtung 12 und ein Spannfutter 14. Das Rotationswerkzeugteil 10 ist mithilfe des Spannfutters 14 als Werkzeugaufnahme zur Aufnahme eines Rotationswerkzeugs ausgebildet.

Die Luftfördervorrichtung 12 umfasst eine Saugkomponente 16 sowie eine Blaskomponente 18.

Die Saugkomponente 16 ist eingerichtet, Luft an einer Frontseite 20 von vorne, also zur Frontseite 20 hin, anzusaugen. Im Inneren des Rotationswerkzeugteils 10 transportiert die Saugkomponente 16 im Betrieb die Luft in Richtung einer Rückseite 22 des Rotationswerkzeugteils 10. Sie umfasst dazu einen Impeller 24 mit einem Flügelrad 26, das eine Vielzahl von Flügeln 28 aufweist. Zur Vereinfachung der Darstellung ist lediglich einer der Flügel 28 mit einem Bezugszeichen versehen. Das Flügelrad 26 kann beispielsweise 7 oder 9 Flügel aufweisen.

Die Blaskomponente 18 ist eingerichtet, Luft von der Frontseite 20 zu blasen. Dazu sind in der Blaskomponente 18 an der Frontseite 20 Luftaustrittsöffnungen 30 ausgebildet, von denen zur Vereinfachung der Darstellung in Fig. 1 lediglich eine mit einem Bezugszeichen versehen ist. Die Blaskomponente 18 saugt im Betrieb Luft an radial ausgebildeten Lufteintrittsöffnungen 31 an.

Die Saugkomponente 16 weist dagegen radial gelegene Luftaustrittsöffnungen 32 und an der Frontseite 20 eine Lufteintrittsöffnung 33 auf. Wiederum ist zur Vereinfachung der Darstellung lediglich eine der Luftaustrittsöffnungen 32 mit einem Bezugszeichen versehen.

Somit sind die Blaskomponente 18 und die Saugkomponente 16 bei Betrieb, insbesondere bei Rotation des Rotationswerkzeugteils 10 entlang einer Arbeitsrichtung, beispielsweise rechtsdrehend, eingerichtet, an der Frontseite 20 gegenläufige Strömungen zu erzeugen.

Bei dem in Fig. 1 gezeigten Rotationswerkzeugteil 10 wird eine Sogwirkung entlang des Spannfutters 14 und gegebenenfalls entlang einem darin aufgenommenen Rotationswerkzeug erzeugt. Insgesamt wirkt das Rotationswerkzeugteil 10 bei diesem Ausführungsbeispiel als Saugvorrichtung.

Ein weiteres Rotationswerkzeugteil 10, das ebenfalls als Saugvorrichtung ausgebildet ist, zeigt Fig. 2.

Insbesondere zeigt Fig. 2 eine Draufsicht auf die Frontseite 20 des Rotationswerkzeugteils 10.

Diese Ausführungsform weist an der Frontseite 20 eine Frontplatte 34 auf. Die Frontplatte 34 weist eine Vielzahl von radial um die Längsachse L verteilten Schlitzen 36 auf. Die Hauptrichtungen der Schlitze 36 verlaufen schräg zu den jeweiligen Radialrichtungen oder Durchmessern der Frontplatte 34.

Dazu ist in Fig. 2 beispielhaft eine Radialrichtungen RR sowie eine Hauptrichtung HR eines der Schlitze 36 eingezeichnet.

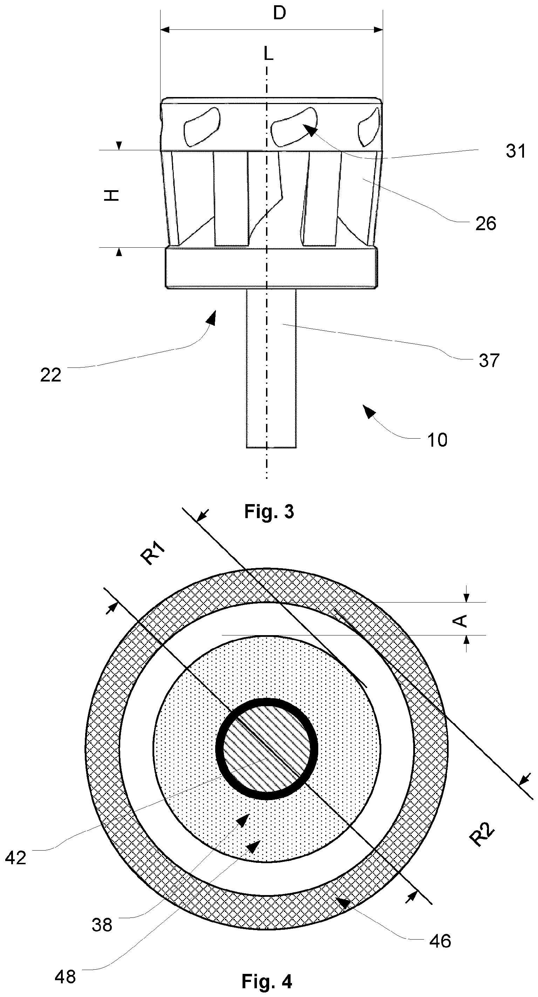

Fig. 3 zeigt das Rotationswerkzeugteil 10 aus Fig. 2 in einer Seitenansicht.

An der Rückseite 22 entspringt ein Schaft 37, mit dem das Rotationswerkzeugteil 10 in einem Drehantrieb, beispielsweise einer Fräsmaschine oder Bohrmaschine, eingespannt und von diesem rotatorisch angetrieben werden kann.

Die Flügelräder 26 weisen eine entlang einer Längsachse L gemessene Höhe H auf. Die Höhe H beträgt wenigstens das 1 ,3-fache eines Radius, also einer Hälfte eines Durchmessers D, des Rotationswerkzeugteils 10. Im dargestellten Ausführungsbeispiel beträgt die Höhe H ungefähr das 1 ,5-fache des Radius und somit das 0,75-fache des Durchmessers D.

Fig. 4 zeigt in einer stark schematisierten Darstellung einen Querschnitt eines in einem Rotationswerkzeugteil 10 aufgenommenen Rotationswerkzeugs 42. Fig. 4 zeigt weiter Strömungsverhältnisse, wie sie im Betrieb, insbesondere bei Rotation des Rotationswerkzeugteils 10 um die Arbeitsrichtung, insbesondere im Falle von Saugvorrichtungen entsprechend der vorangehenden Ausführungsbeispiele, erzeugt werden können.

Zu erkennen ist, dass in einem Zentrumsbereich 38 in radialer Nähe zum Rotationswerkzeug 42 und damit entlang der Längsachse L (siehe Fig. 3) ein Saugstrom 48 erzeugt wird. Außenseitig wird dagegen ein Blasstrom 46 erzeugt.

Zwischen dem Saugstrom 48 und dem Blasstrom 46 befindet sich ein Abstand A. Insbesondere wirkt der Saugstrom 48 innerhalb eines Umfangs bis zu einem Radius R1, wohingegen, zumindest größtenteils, der Blasstrom 46 ab einem Radius R2 wirkt. Dabei ist der Radius R2 größer als der Radius R1, sodass sich der Abstand A ergibt.

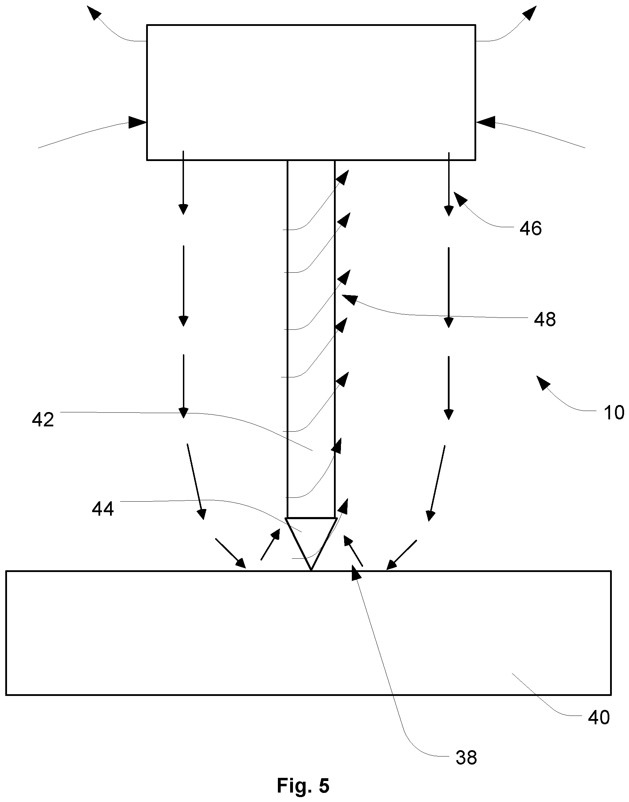

Fig. 5 zeigt diese Strömungsverhältnisse in einer schematischen Seitenansicht eines in Rotation befindlichen Rotationswerkzeugteils 10, das mit einem Rotationswerkzeug 42 und dessen Werkzeugspitze 44 ein Werkstück 40 bearbeitet.

Zu erkennen ist insbesondere, dass außenseitig ein gemäß der Darstellung in Fig. 5 fallender Luftstrom in Form des Blasstrom 46 erzeugt wird, wohingegen im Zentralbereich 38 ein aufsteigender Saugstrom 48 wirkt.

Durch die Rotation des Rotationswerkzeugteils 10 ergeben sich Helix-ähnliche Strömungen des Blasstroms 46 und des Saugstroms 48.

Durch die Rotation des Rotationswerkzeugs 42, insbesondere wenn dieses beispielsweise eine Wendel aufweist, kann diese Rotation insbesondere beim Saugstrom 48 weiter verstärkt werden.

In der Nähe des Werkstücks 40 und damit auch in der Nähe der Werkzeugspitze 44 strömt der Blasstrom 46 von außen in den Zentrumsbereich 38 hinein und wird zum Saugstrom 48. Dabei verringert sich sein Rotationsradius. Ein Pirouetteneffekt mit Steigerung der Rotationsfrequenz und der effektiven Reinigungswirkung kann somit entstehen.

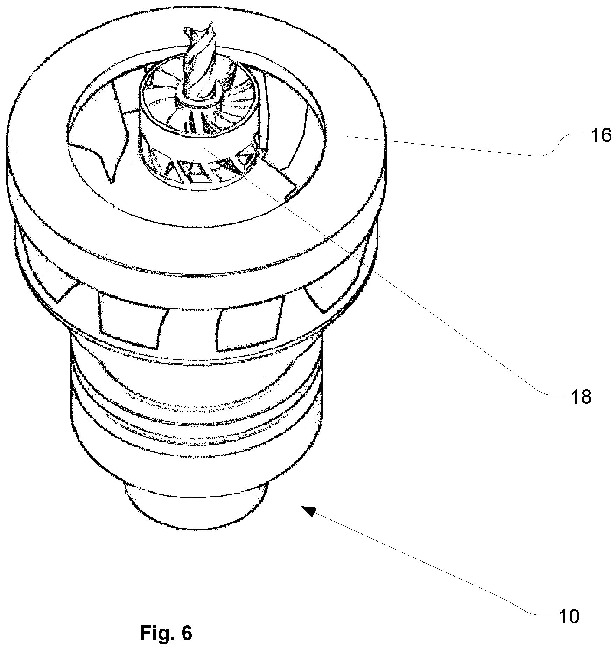

Fig. 6 zeigt ein Rotationswerkzeugteil 10, das als Blasvorrichtung ausgebildet ist. Bei diesem ist die Blaskomponente 18 zentral angeordnet, wohingegen die Saugkomponente 16 radial um die Blaskomponente 18 umlaufend ausgebildet ist.

Die Blaskomponente 18 kann, wie im Ausführungsbeispiel gemäß Fig. 6 dargestellt, oberhalb der Saugkomponente 16 sitzen.

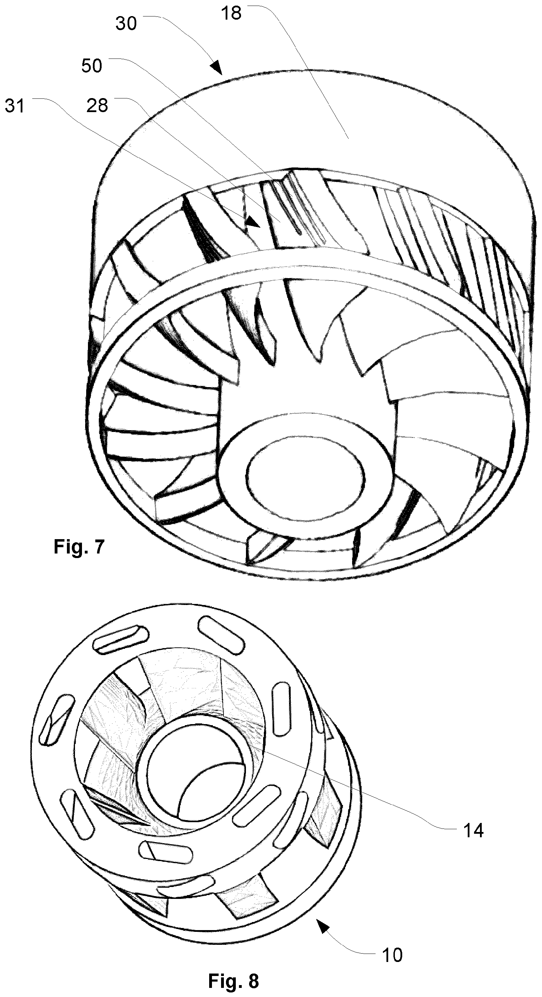

Eine vergrößerte Darstellung der Blaskomponente 18 zeigt Fig. 7 in einer perspektivischen Darstellung.

Zu erkennen sind radial ausgebildete Lufteintrittsöffnungen 31, von denen wiederum beispielhaft lediglich eine Lufteintrittsöffnung 31 mit einem Bezugszeichen versehen ist.

Frontseitig sind Luftaustrittsöffnungen 30 ausgebildet.

Zur Geräuschreduktion weisen Flügel 28, von denen wiederum beispielhaft und vereinfachend lediglich ein Flügel 28 mit einem Bezugszeichen versehen ist, Dämpfungselemente 50 auf, von denen wiederum zur Vereinfachung der Darstellung lediglich eines mit einem Bezugszeichen versehen ist. Bei diesem Ausführungsbeispiel verlaufen die Dämpfungselemente 50 linienförmig entlang der Flügel 28.

Die Flügel 28 verlaufen an der Luftaustrittsöffnung 30 relativ zur Längsachse L (siehe Fig. 3) schräg aus. Dies unterstützt, dass die Blaskomponente 18 Luft schräg zur Längsachse L bläst.

Abschließend zeigt Fig. 8 in einer perspektivischen Darstellung ein weiteres Rotationswerkzeugteil 10 in Form einer Blasvorrichtung. Bei diesem Ausführungsbeispiel ist das Spannfutter 14 als Spannzange ausgebildet, wohingegen die Ausführungsformen gemäß Fig. 1 und 6 Spannfutter 14 in Form von Hydrodehnspannfuttern aufweisen.

### Bezugszeichenliste

- 10: Rotationswerkzeugteil
- 12: Luftfördervorrichtung
- 14: Spannfutter
- 16: Saugkomponente
- 18: Blaskomponente
- 20: Frontseite
- 22: Rückseite
- 24: Impeller
- 26: Flügelrad
- 28: Flügel
- 30: Luftaustrittsöffnung (Blaskomponente)
- 31: Lufteintrittsöffnung (Blaskomponente)
- 32: Luftaustrittsöffnung (Saugkomponente)
- 33: Lufteintrittsöffnung (Saugkomponente)
- 34: Frontplatte
- 36: Schlitz
- 37: Schaft
- 38: Zentralbereich
- 40: Werkstück
- 42: Rotationswerkzeug
- 44: Rotationswerkzeugspitze
- 46: Blasstrom
- 48: Saugstrom
- 50: Dämpfungselement
- A: Abstand
- D: Durchmesser
- H: Höhe
- HR: Hauptrichtung
- L: Längsachse
- RR: Radialrichtung
- R1: Radius
- R2: Radius

## Patentansprüche

1. Rotationswerkzeugteil (10), beispielsweise Werkzeugaufnahme zur Aufnahme eines Rotationswerkzeugs (42), insbesondere eines Fräswerkzeugs oder Bohrwerkzeugs, wobei das Rotationswerkzeugteil (10) eine Längsachse (L) als Rotationsachse aufweist,
umfassend eine Luftfördervorrichtung (12), wobei die Luftfördervorrichtung (12) eine Saugkomponente (16) zum Ansaugen von Luft an der Frontseite (20), insbesondere aus der Richtung eines Werkstücks (40) umfasst,
**dadurch gekennzeichnet,**
**dass** die Luftfördervorrichtung (12) eine Blaskomponente (18) zum Blasen von Luft von einer Frontseite (20) des Rotationswerkzeugteils (10), insbesondere in Richtung des Werkstücks (40), umfasst.

2. Rotationswerkzeugteil (10) nach dem vorhergehenden Patentanspruch, **dadurch gekennzeichnet, dass** die Luftfördervorrichtung (12) einen Impeller (24) umfasst.

3. Rotationswerkzeugteil (10) nach einem der vorhergehenden Patentansprüche, **dadurch gekennzeichnet, dass** das Rotationswerkzeugteil (10) ein Flügelrad (26) mit einer Vielzahl von Flügeln (28) aufweist, wobei die Flügel (28) eine parallel zur Längsachse (L) gemessene Höhe (H) von wenigstens dem 1,3-Fachen des Radius des Rotationswerkzeugteils (10) aufweisen.

4. Rotationswerkzeugteil (10) nach einem der vorhergehenden Patentansprüche, **dadurch gekennzeichnet, dass** an der Frontseite (20) eine Frontplatte (34) mit einer Vielzahl von Schlitzen (36) angeordnet und / oder ausgebildet ist, wobei die Schlitze (36) radial verteilt um die Längsachse (L) positioniert sind und schräg zu ihren Radialrichtungen (RR) verlaufen.

5. Rotationswerkzeugteil (10) nach einem der vorhergehenden Patentansprüche, wobei dieses einstückig ausgebildet ist.

6. Rotationswerkzeugteil (10) nach einem der vorhergehenden Patentansprüche, umfassend ein Spannfutter (14).

7. Rotationswerkzeugteil (10) nach einem der vorhergehenden Patentansprüche, **dadurch gekennzeichnet, dass** das Rotationswerkzeugteil (10) mehrstückig ausgebildet sind, wobei besonders bevorzugt das Spannfutter (14) und die Luftfördervorrichtung (12) als separate Teile ausgebildet sind.

8. Rotationswerkzeugteil (10) nach einem der vorhergehenden Patentansprüche, **dadurch gekennzeichnet, dass** das Spannfutter (14) von einer der Frontseite (20) gegenüberliegenden Rückseite (22) in die Luftfördervorrichtung (12) eingeführt ist.

9. Rotationswerkzeugteil (10) nach einem der vorhergehenden Patentansprüche, **dadurch gekennzeichnet, dass** das Spannfutter (14) als Hydrodehnspannfutter ausgebildet ist.

10. Rotationswerkzeugteil (10) nach einem der vorhergehenden Patentansprüche, **dadurch gekennzeichnet, dass** das Spannfutter (14) als Spannzangenfutter ausgebildet ist.

11. Rotationswerkzeugteil (10) nach einem der vorhergehenden Patentansprüche, **dadurch gekennzeichnet, dass** die Saugkomponente (16) eingerichtet ist, bei Rotation des Rotationswerkzeugteils (10) entlang einer Arbeitsrichtung in einem Zentralbereich (38) um die Längsachse (L) Luft an der Frontseite (20) anzusaugen.

12. Rotationswerkzeugteil (10) nach einem der vorhergehenden Patentansprüche, **dadurch gekennzeichnet, dass** die Saugkomponente (16) und die Blaskomponente (18) eingerichtet sind, bei Rotation des Rotationswerkzeugteils (10), zumindest bei Rotation entlang der Arbeitsrichtung, in unterschiedlichen Radien (R1, R2) Luft anzusaugen beziehungsweise zu blasen.

13. Rotationswerkzeugteil (10) nach einem der vorhergehenden Patentansprüche, **dadurch gekennzeichnet, dass** die durch die Saugkomponente (16) und die Blaskomponente (18) bei Rotation des Rotationswerkzeugteils (10) an der Frontplatte (34) erzeugten Strömungen voneinander, insbesondere um wenigstens 10 Prozent des Durchmessers (D) des Rotationswerkzeugteils (10), beabstandet sind.

14. Rotationswerkzeugteil (10) nach einem der vorhergehenden Patentansprüche, **dadurch gekennzeichnet, dass** die Blaskomponente (18) eingerichtet ist, bei Rotation des Rotationswerkzeugteils (10), insbesondere bei Rotation entlang der Arbeitsrichtung, in dem Zentrumsbereich (38) um die Längsachse (L) Luft von der Frontseite (20) zu blasen.

15. Rotationswerkzeugteil (10) nach einem der vorhergehenden Patentansprüche, **dadurch gekennzeichnet, dass** die Blaskomponente (18) eingerichtet ist, die Luft schräg zur Längsrichtung (L) zu blasen.
